# EUROPÄISCHE PATENTSCHRIFT

(11) **EP 2 043 954 B1**
(45) Veröffentlichungstag und Bekanntmachung des Hinweises auf die Patenterteilung: **22.06.2011**
(21) Anmeldenummer: 07765118.0
(22) Anmeldetag: 07.07.2007
(51) Int. Cl.: C01F 7/02

(54) **VERFAHREN ZUR HERSTELLUNG VON NANOPARTIKELN AUS ALUMINIUMSPINELLEN UND DEREN ANWENDUNG**
METHOD FOR PRODUCING NANOPARTICLES OF ALUMINIUM SPINELS, AND THE USE THEREOF
PROCÉDÉ DE PRÉPARATION DE NANOPARTICULES À PARTIR DE SPINELLES D'ALUMINIUM

(30) Priorität: 13.07.2006 DE 102006032582
(43) Veröffentlichungstag der Anmeldung: 08.04.2009
(73) Patentinhaber: Clariant Finance (BVI) Limited, Road Town, Tortola (VG)
(72) Erfinder: ROESCH, Norbert, 86368 Gersthofen (DE)
(74) Vertreter: Paczkowski, Marcus
(86) Internationale Anmeldenummer: PCT/EP2007/006036
(87) Internationale Veröffentlichungsnummer: WO 2008/006523

(56) Entgegenhaltungen:
- DATABASE CA [Online] CHEMICAL ABSTRACTS SERVICE, COLUMBUS, OHIO, US; 27. Januar 2006 (2006-01-27), WRZYSZCZ, JOZEF ET AL: "Method for obtaining zinc aluminate of high specific surface" XP002462487 gefunden im STN Database accession no. 2006:75376 & PL 189 438 B1 (PAN, POL.) 31. August 2005 (2005-08-31)
- ZAWADZKI ET AL: "Synthesis of nanosized and microporous zinc aluminate spinel by microwave assisted hydrothermal method (microwave-hydrothermal synthesis of ZnAl2O4)" SOLID STATE SCIENCES, ELSEVIER, PARIS, FR, Bd. 8, Nr. 1, Januar 2006 (2006-01), Seiten 14-18, XP005230830 ISSN: 1293-2558
- ZAWADZKI M ET AL: "Hydrothermal synthesis of nanoporous zinc aluminate with high surface area" MATERIALS RESEARCH BULLETIN, ELSEVIER, KIDLINGTON, GB, Bd. 35, Nr. 1, Januar 2000 (2000-01), Seiten 109-114, XP004203399 ISSN: 0025-5408
- WEI ET AL: "Synthesis and characterization of nanosized zinc aluminate spinel by sol-gel technique" MATERIALS LETTERS, NORTH HOLLAND PUBLISHING COMPANY. AMSTERDAM, NL, Bd. 60, Nr. 6, März 2006 (2006-03), Seiten 823-827, XP005211205 ISSN: 0167-577X
- YANG C C ET AL: "Synthesis and physical characteristics of ZnAl2O4 nanocrystalline and ZnAl2O4/Eu core-shell structure via hydrothermal route" POWDER TECHNOLOGY, ELSEVIER SEQUOIA, LAUSANNE, CH, Bd. 148, Nr. 1, 20. Oktober 2004 (2004-10-20), Seiten 3-6, XP004665275 ISSN: 0032-5910

## Beschreibung

Die vorliegende Erfindung betrifft die Herstellung von Nanopartikeln bestehend aus Aluminiumspinellen sowie deren Anwendung

Aluminiumspinelle kommen als mineralische Stoffe natürlich vor, wobei deren Herstellung in nanokristalliner Form sowie der Einsatz für eine Vielzahl von Einsatzgebieten bereits beschrieben ist. Zu den bekanntesten Vertretern gehören der Zinkspinell ZnAl₂O₄, bekannt als Gahnit, und der Magnesiumspinell MgAl₂O₄. Die Aluminiumspinelle werden eingesetzt als Rohstoffe für Keramik (S.K.Sampath, J.F. Cordano, J. Am. Ceram. Soc. 81, 649 (1998)), als Oxidationskatalysatoren (T. Ohgushi, S. Umeno, Bull. Chem.Soc. Jpn. 60 (1987) 4457), und als Pigmente (E. DeBie, P. Doyen, Cobalt 15 (1962) 3). Zinkspinell verfügt außerdem über eine Bandlücke und zeigt deshalb interessante optische Eigenschaften, die das Material für Elektrolumineszenzanwendungen (Hiroaki Matsui, Chao-Nan Xu, Yun Liu, Hiroshi Tateyama, Physical Review B 69, 235109 (2004», wie in LEDs und Display gefordert, qualifizieren.

In der Literatur ist die Herstellung von nanopartikulärem Zinkspinell bereits beschrieben (J. of Sol-Gel Science and Technology, 35, p. 221-224, 2005). Es wird für die Herstellung ein spezielles Aluminiumalkoholat Al(OⁱOPr)₃ und Zn(NO₃)₂* 6 H₂O als Vorstufe verwendet und bei Temperaturen zwischen 450°C und 900°C kalziniert. In "J. of Alloys and Compounds, 394 (2005), 255-258" geht man von Aluminiumnitrat und Zinknitrat mit einem Zusatz von Harnstoff aus und kalziniert diese Mischung bei 350 - 450°C. Ein weiterer Syntheseweg für Aluminate vom Kupfer, Mangan und Zink ist in "J. of Alloys and Compounds, 315 (2001), 123 -128" beschrieben. Auf diesem Weg wird von Metallacetaten, Aluminiumnitrat und Brennstoffen wie Hexamethyltetramin, Harnstoff, Carbohydrazid und Glycin ausgegangen. Die Mischungen werden bei 500°C in einem Muffelofen umgewandelt.

Die Nachteile der Verfahren nach dem bekannten Stand der Technik bestehen nun darin, dass teure Ausgangsverbindungen eingesetzt werden oder die Ausbeuten pro Zeit aufgrund der Prozesse gering sind. Die bekannten Verfahren sind daher nicht geeignet, die Aluminiumspinelle in industriellem Maßstab wirtschaftlich herzustellen.

Ziel der vorliegenden Erfindung ist es deshalb, ein Verfahren zur Herstellung von nano-kristallinen Aluminiumspinellen zur Verfügung zu stellen, das hohe Ausbeuten in kurzer Zeit bei minimaler Energiezufuhr liefert. Das dabei erzeugte Produkt sollte mit einfachen Mitteln redispergierbar sein und damit stabile nano-Suspensionen liefern können. Diese Aufgabe wurde durch das im Folgenden beschriebene Verfahren gelöst, dessen besonderes Merkmal darin besteht, dass hier eine Kalzinierung von unter 30 Minuten ausreichend ist.

Gegenstand der Erfindung ist ein Verfahren zur Herstellung von Nanopartikeln aus Aluminiumspinellen, wobei man eine wässrige Lösung von Aluminiumchlorohydrat mit einem Salz eines Metalls, dessen Oxid mit Aluminiumoxid ein Spinellgitter ausbilden kann, versetzt, anschließend trocknet, innerhalb weniger als 30 Minuten kalziniert und die so erhaltenen Agglomerate zerkleinert.

Ausgangspunkt für das erfindungsgemäße Verfahren ist Aluminiumchlorohydrat, dem die Formel Al₂(OH)ₓCl_{y} zukommt, wobei x eine Zahl von 2,5 bis 5,5 und y eine Zahl von 3,5 und 0,5 ist und die Summe von x und y stets 6 beträgt. Bevorzugt geht man dabei von 50 %igen wässrigen Lösungen des Aluminiumchlorohydrats aus, wie sie kommerziell verfügbar sind.

Zu dieser Lösung gibt man ein Salz eines Metalls, das mit Aluminiumoxid ein Spinellgitter ausbilden kann. Als derartige Metallsalze kommen alle zweiwertigen Metallsalze in Frage, wie zum Beispiel die zweiwertigen Salze von Kobalt, Zink, Mangan, Kupfer, Eisen, Magnesium, Cadmium, Nickel. Spinelle besitzen die Summenformel Mal₂O₄, wobei M das zweiwertige Metall darstellt. Aus dieser Summenformel ergibt sich automatisch die Menge an Metallsalz, die erfindungsgemäß zu der Lösung des Aluminiumchlorohydrats zugegeben werden muss. Da das Spinellgitter auch Fehlstellen enthalten kann, kann bei der Menge an Metall M bzw. der Menge an Metallsalz, bezogen auf die Al₂O₃-Matrix auch von dem stöchiometrisch errechneten Wert abgewichen werden. Im Allgemeinen beträgt die Menge an Metallsalz, bezogen auf die Al₂O₃-Matrix 30 bis 80, vorzugsweise 50 Mol-%.

Bevorzugt wird diese Lösung auch noch mit Kristallisationskeimen versetzt, die die Bildung des Spinellgitters befördern. Insbesondere bewirken solche Keime eine Herabsetzung der Temperatur für die Bildung des Spinellgitters bei der nachfolgenden thermischen Behandlung. Als Keime kommen in Frage feinstdisperser Spinell, beispielsweise Zinkspinell, mit einer mittleren Teilchengröße von weniger als 0,1 µm. Im Allgemeinen reichen 2 bis 3 Gew.-% an Keimen, bezogen auf den entstehenden Spinell.

Diese Suspension aus Aluminiumchlorohydrat und Metallsalz sowie gegebenenfalls Kristallisationskeimen wird dann bis zum Trocknen, z.B. durch Sprühtrocknung, Gefriertrocknung, Granulierung oder durch Walzentrockner eingedampft und einer thermischen Behandlung (Kalzinierung) unterworfen. Diese Kalzinierung erfolgt in hierfür geeigneten Vorrichtungen, beispielsweise in Durchschub-, Kammer-, Rohr- oder Mikrowellenöfen oder in einem Wirbelschichtreaktor. Besonders geeignet sind Drehrohröfen, die einen hohen Durchsatz bei geringer Verweilzeit ermöglichen. Gemäß einer Variante des erfindungsgemäßen Verfahrens kann man auch so vorgehen, dass man die wässrige Suspension aus Aluminiumchlorohydrat und Metallsalz ohne vorherige Entfernung des Wassers direkt in die Kalzinierungsapparatur einspritzt.

Die Temperatur für die Kalzinierung soll 1100°C nicht übersteigen. Die untere Temperaturgrenze ist abhängig von der gewünschten Ausbeute an Aluminiumspinell und dem gewünschten Restchlorgehalt. Die Spinellbildung setzt je nach Spinelltyp schon ab ca. 400°C ein, um jedoch den Chlorgehalt niedrig und die Ausbeute an Spinell hoch zu halten, wird man jedoch etwas höhere Temperaturen anwenden. Für Zinkspinell liegt z.B. die bevorzugte Temperatur bei ca. 850°C.

Die Zeit für die Kalzinierung liegt im Allgemeinen unter 30 Minuten und kann je nach Spinelltyp nur wenige Minuten betragen.

Bei der Kalzinierung fallen Agglomerate des Aluminiumspinells in Form von nahezu kugelförmigen Primärkristalliten an, wobei unter dem Begriff "Nano-" eine Teilchengröße von im Allgemeinen 1 bis 100 nm verstanden wird. Diese Agglomerate werden in einem anschließenden Schritt desagglomeriert, wobei sämtliche in der Keramik bekannten Desagglomerationsverfahren, wie beispielsweise Mahlen oder Zufuhr von Ultraschallenergie, eingesetzt werden können, da es sich im vorliegenden Fall um relativ leicht zerstörbare weiche Agglomerate handelt. Die Desagglomeration erfolgt vorzugsweise bei Temperaturen von 20 bis 100°C, besonders bevorzugt bei 20 bis 90°C. Vorzugsweise dient zur Desagglomeration eine Nass- oder Trockenmahlung, wobei die Nassmahlung vorzugsweise in einer Attritor- oder Rührwerkskugelmühle erfolgt, während die Trockenmahlung in einer Luftstrahlmühle durchgeführt wird. Da die bei der Mahlung als Produkt angestrebten Nanopartikel äußerst reaktiv sind, werden vorzugsweise vor oder während der Mahlung Additive zugesetzt, die eine erneute Agglomeration der Nanoteilchen verhindern. Besonders günstig ist es daher, die anschließende Desagglomeration in Form einer Nassmahlung durchzuführen. Zur Nassmahlung eignen sich Vibrationsmühlen, Attritormühlen, Kugelmühlen, Rührwerkskugelmühlen oder ähnliche Vorrichtungen. Als besonders vorteilhaft hat sich dabei der Einsatz von Rührwerkskugelmühlen gezeigt. Die Mahldauer hängt von der Festigkeit der Agglomerate und der gewünschten Feinheit ab und liegt beim erfindungsgemäßen Verfahren üblicherweise zwischen 2 und 6 Stunden. Die Nassvermahlung oder Desagglomeration wird vorteilhaft im wässrigen Medium durchgeführt, es können jedoch auch alkoholische oder andere organische Lösungsmittel eingesetzt werden. So erhält man beispielsweise nach einer sechsstündigen Mahlung in Wasser eine wässrige Suspension von nanokristallinem Aluminiumspinell mit einem d90-Wert von ungefähr 30 nm. Die nach der Nassvermahlung erhaltene Suspension kann durch Sprühtrocknung, Wirbelschichttrocknung, Granulierung oder Gefriertrocknung in ein definiertes Pulver überführt werden.

Eine weitere Möglichkeit besteht darin, die Oberflächen des Nanospinells zu modifizieren und damit eine Adaption an organische Lösungsmittel und Beschichtungsmassen zu erhalten.

Für die erfindungsgemäße Modifizierung der Oberfläche dieser Nanopartikel mit Beschichtungsmitteln, wie z. B. Silanen oder Siloxanen gibt es zwei Möglichkeiten. Gemäß der ersten bevorzugten Variante kann man die Desagglomeration in Gegenwart des Beschichtungsmittels vornehmen, beispielsweise indem man das Beschichtungsmittel während des Mahlens in die Mühle gibt. Eine zweite Möglichkeit besteht darin, dass man zuerst die Agglomerate der Nanopartikel zerstört und anschließend die Nanopartikel, vorzugsweise in Form einer Suspension in einem Lösungsmittel, mit dem Beschichtungsmittel behandelt.

Als Lösungsmittel für die Desagglomeration kommen, wie bereits oben erwähnt, in Frage sowohl Wasser als auch übliche Lösungsmittel, vorzugsweise solche, die auch in der Lackindustrie genommen werden, wie zum Beispiel C₁-C₄-Alkohole, insbesondere Methanol, Ethanol oder Isopropanol, Aceton, Tetrahydrofuran, Butylacetat. Erfolgt die Desagglomeration in Wasser, sollte eine anorganische oder organische Säure, beispielsweise HCl, HNO₃, Ameisensäure oder Essigsäure zugegeben werden, um die entstehenden Nanopartikel in der wässrigen Suspension zu stabilisieren. Die Menge an Säure kann 0,1 bis 5 Gew.-%, bezogen auf das Mischoxid, betragen. Aus dieser wässrigen Suspension der sauer modifizierten Nanopartikel wird dann bevorzugt die Kornfraktion mit einem Teilchendurchmesser von weniger als 20 nm durch Zentrifugieren abgetrennt. Anschließend wird bei erhöhter Temperatur, beispielsweise bei ca. 100°C das Beschichtungsmittel, vorzugsweise ein Silan oder Siloxan, zugegeben. Die so behandelten Nanopartikel fallen aus, werden abgetrennt und zu einem Pulver getrocknet, beispielsweise durch Gefriertrocknung.

Als geeignete Beschichtungsmittel kommen hierbei vorzugsweise Silane oder Siloxane oder deren Mischungen infrage.

Darüber hinaus sind als Beschichtungsmittel alle Stoffe geeignet, die an der Oberfläche der Mischoxide physikalisch anbinden können (Adsorption) oder die durch die Bildung einer chemischen Bindung an der Oberfläche der Mischoxid-Partikel anbinden können. Da die Oberfläche der Mischoxid-Partikel hydrophil ist und freie Hydroxygruppen zur Verfügung stehen, kommen als Beschichtungsmittel Alkohole, Verbindungen mit Amino-, Hydroxy-, Carbonyl-, Carboxyl- oder Mercapto-Funktionen, Silane oder Siloxane infrage. Beispiele für solche Beschichtungsmittel sind Polyvinylalkohol, Mono-, Di- und Tricarbonsäuren, Aminosäuren, Amine, Wachse, Tenside, Hydroxycarbonsäuren, Organosilane und Organosiloxane.

Als Silane bzw. Siloxane kommen infrage Verbindungen der Formeln

a) R [-Si (R'R")-O-]n Si (R'R")-R"' oder cyclo-[-Si (R'R")-O-]r Si (R'R")-O-

worin

R, R', R", R"'- gleich oder verschieden voneinander einen Alkylrest mit 1 - 18 C-Atomen oder einen Phenylrest oder einen Alkylphenyl- oder einen Phenylalkylrest mit 6 - 18 C-Atomen oder einen Rest der allgemeinen Formel -(CmH2m-O)p-CqH2q+1 oder einen Rest der allgemeinen Formel -CsH2sY oder einen Rest der allgemeinen Formel -XZt-1,
- n: eine ganze Zahl mit der Bedeutung 1 ≤ n ≤ 1000, bevorzugt 1 ≦ n ≦ 100,
- m: eine ganze Zahl 0 ≤ m ≤ 12 und
- p: eine ganze Zahl 0 ≤ p ≤ 60 und
- q: eine ganze Zahl 0 ≤ q ≤ 40 und
- r: eine ganze Zahl 2 ≤ r ≤ 10 und
- s: eine ganze Zahl 0 ≤ s ≤ 18 und
- Y: eine reaktive Gruppe, beispielsweise α,β-ethylenisch ungesättigte Gruppen, wie (Meth)Acryloyl-, Vinyl- oder Allylgruppen, Amino-, Amido-, Ureido-, Hydroxyl-, Epoxy-, Isocyanato-, Mercapto-, Sulfonyl-, Phosphonyl-, Trialkoxylsilyl-, Alkyldialkoxysilyl-, Dialkylmonoalkoxysilyl-, Anhydrid- und/oder Carboxylgruppen, Imido-, Imino-, Sulfit-, Sulfat-, Sulfonat-, Phosphin-, Phosphit-, Phosphat-, Phosphonatgruppen und
- X: ein t-funktionelles Oligomer mit
- t: eine ganze Zahl 2 ≤ t ≤ 8 und
- Z: wiederum einen Rest

R [-Si (R'R")-O-]n Si (R'R")-R'" oder cyclo-[-Si (R'R")-O-]r Si (R'R")-O-

darstellt, wie vorstehend definiert.

Das t-funktionelle Oligomer X ist dabei bevorzugt ein:

Oligoether, Oligoester, Oligoamid, Oligourethan, Oligoharnstoff, Oligoolefin, Oligovinylhalogenid, Oligovinylidendihalogenid, Oligoimin, Oligovinylalkohol, Ester, Acetal oder Ether von Oligovinylalkohol, Cooligomer von Maleinsäureanhydrid, Oligomer von (Meth)acrylsäure, Oligomer von (Meth)acrylsäureestern, Oligomer von (Meth)acrylsäureamiden, Oligomer von (Meth)acrylsäureimiden, Oligomer von (Meth)acrylsäurenitril, besonders bevorzugt Oligoether, Oligoester, Oligourethan.

Beispiele für Reste von Oligoethem sind Verbindungen vom Typ -(CaH2a-O)b-CaH2a- bzw. O-(CaH2a-O)b-CaH2a-O mit 2 ≤ a ≤ 12 und 1 ≤ b ≤ 60, z. B. ein Diethylenglykol-, Triethylenglykol- oder Tetraethylenglykol-Rest, ein Dipropylenglykol-, Tripropylenglykol-, Tetrapropylenglykol-Rest, ein Dibutylenglykol-, Tributylenglykol- oder Tetrabutylenglykol-Rest. Beispiele für Reste von Oligoestern sind Verbindungen vom Typ -CbH2b-(C(CO) CaH2a-(CO) O-CbH2b-)c- bzw. -O-CbH2b-(C(CO) CaH2a-(CO) O-CbH2b-)c-O- mit a und b unterschiedlich oder gleich 3 ≤ a ≤ 12,3 ≤ b ≤ 12 und 1 ≤ c ≤ 30, z. B. ein Oligoester aus Hexandiol und Adipinsäure.
b) Organosilane des Typs (RO)₃Si(CH₂)m-R'
R = Alkyl, wie Methyl-, Ethyl-, Propyl-
m=0,1 -20
R' = Methyl-, Phenyl,
-C4F9; OCF2-CHF-CF3, -C6F13, -O-CF2-CHF2
-NH2, -N3, SCN, -CH=CH2, -NH-CH2-CH2-NH2,
-N-(CH2-CH2-NH2)2
-OOC(CH3)C = CH2
-OCH2-CH(O)CH2
-NH-CO-N-CO-(CH2)5
-NH-COO-CH3, -NH-COO-CH2-CH3, -NH-(CH2)3Si(OR)3
-Sx-(CH2)3)Si(OR)3
-SH
-NR'R"R"' (R' = Alkyl, Phenyl; R" = Alkyl, Phenyl; R'" = H, Alkyl, Phenyl, Benzyl,
C2H4NR"" mit R"" = A, Alkyl und R""' = H, Alkyl).

Beispiele für Silane der oben definierten Art sind z. B. Hexamethyldisiloxan, Octamethyltrisiloxan, weitere homologe und isomere Verbindungen der Reihe SinOn-1 (CH3)2n+2, wobei
n eine ganze Zahl 2 ≤ n ≤ 1000 ist, z. B. Polydimethylsiloxan 200® fluid (20 cSt).

Hexamethyl-cyclo-trisiloxan, Octamethyl-cyclo-tetrasiloxan, weitere homologe und isomere Verbindungen der Reihe

(Si-O)r(CH3)2r,

wobei
r eine ganze Zahl 3 ≤ r ≤ 12 ist,

Dihydroxytetramethydisiloxan, Dihydroxyhexamethyltrisiloxan,
Dihydroxyoctamethyltetrasiloxan, weitere homologe und isomere Verbindungen der Reihe

HO-[(Si-O)n(CH3)2n]-Si(CH3)2-OH

oder

HO-[(Si-O)n(CH3)2n]-[Si-O)m(C6H5)2m]-Si(CH3)2-OH,

wobei
m eine ganze Zahl 2 ≤ m ≤ 1000 ist,
bevorzugt sind die α,ω-Dihydroxypolysiloxane, z. B. Polydimethylsiloxan (OH-Endgruppen, 90-150 cST) oder Polydimethylsiloxan-co-diphenylsiloxan, (Dihydroxy-Endgruppen, 60 cST).

Dihydrohexamethytrisiloxan, Dihydrooctamethyltetrasiloxan weitere homologe und isomere Verbindungen der Reihe

H-[(Si-O)n(CH3)2n]-Si(CH3)2-H,

wobei
n eine ganze Zahl 2 ≤ n ≤ 1000 ist, bevorzugt sind die
α,ω-Dihydropolysiloxane, z. B. Polydimethylsiloxan (Hydrid-Endgruppen, Mn = 580).

Di(hydroxypropyl)hexamehtyltrisiloxan, Dihydroxypropyl)octamethyltetrasiloxan, weitere homologe und isomere Verbindungen der Reihe HO-(CH2)u[(Si-O)n(CH3)2(CH2)u-OH, bevorzugt sind die α,ω-Dicarbinolpolysiloxane mit 3 ≤ u ≤ 18, 3 ≤ n ≤ 1000 oder ihre Polyether-modifizierten Nachfolgeverbindungen auf Basis der Ethylenoxid (EO) und Propylenoxid (PO) als Homo- oder Mischpolymer HO-(EO/PO)ν-(CH2)u[(Si-O)t(CH3)2t]-Si(CH3)2(CH2)u-(EO/PO)ν-OH, bevorzugt sind α,ω-Di(carbinolpolyether)-polysiloxane mit 3 ≤ n ≤ 1000, 3 ≤ u ≤ 18, 1 ≤ v ≤ 50.

Statt α,ω-OH-Gruppen kommen ebenfalls die entsprechenden difunktionellen Verbindungen mit Epoxy-, Isocyanato-, Vinyl-, Allyl- und Di(meth)acryloylgruppen zum Einsatz, z. B. Polydimethylsiloxan mit Vinylendgruppen (850 - 1150 cST) oder TEGORAD 2500 der Fa. Tego Chemie Service.

Es kommen auch die Veresterungsprodukte von ethoxylierten/propoxylierten Trisiloxanen und höheren Siloxanen mit Acrylsäurecopolymeren und/oder Maleinsäurecopolymeren als modifizierende Verbindung infrage, z. B. BYK Silclean 3700 der Fa. Byk Chemie oder TEGO® Protect 5001 der Fa. Tego Chemie Service GmbH.

Statt α,ω-OH-Gruppen kommen ebenfalls die entsprechenden difunktionellen Verbindungen mit -NHR"" mit R"" = H oder Alkyl zum Einsatz, z. B. die allgemein bekannten Aminosiliconöle der Firmen Wacker, Dow Corning, Bayer, Rhodia etc. zum Einsatz, die statistisch auf der Polysiloxankette verteilte (Cyclo)-Alkylaminogruppen oder (Cyclo)-Alkyliminogruppen auf ihrer Polymerkette tragen.

c) Organosilane des Typs (RO)3Si(CnH2n+1) und (RO)3Si(CnH2n+1), wobei
- R: ein Alkyl, wie z. B. Methyl, Ethyl-, n-Propyl-, i-Propyl, Butyl-
- n: 1 bis 20.

Organosilane des Typs R'x(RO)ySi(CnH2n+1) und (RO)3Si(CnH2n+1), wobei
- R: ein Alkyl, wie z. B. Methyl-, Ethyl-, n-Propyl-, i-Propyl-, Butyl-,
- R': ein Alkyl, wie z. B. Methyl-, Ethyl-, n-Propyl-, i-Propyl-, Butyl-,
- R': ein Cycloalkyl
- n: eine ganze Zahl von 1 - 20
- x+y: 3
- x: 1 oder 2
- y: 1 oder 2

Organosilane des Typs (RO)3Si(CH2)m-R', wobei
- R: ein Alkyl, wie z. B. Methyl-, Ethyl-, Propyl-,
- m: eine Zahl zwischen 0,1 - 20
- R': Methyl-, Phenyl, -C4F9; OCF2-CHF-CF3, -C6F13, -O-CF2-CHF2, -NH2, -N3, -SCN, -CH=CH2, -NH-CH2-CH2-NH2, -N-(CH2-CH2-NH2)2, -OOC(CH3)C = CH2, -OCH2-CH(O)CH2, -NH-CO-N-CO-(CH2)5, -NH-COO-CH3, -NH-COO-CH2-CH3, -NH-(CH2)3Si(OR)3, -Sx-(CH2)3)Si(OR)3, -SH-NR'R"R"' (R' = Alkyl, Phenyl; R" = Alkyl, Phenyl; R"' = H, Alkyl, Phenyl, Benzyl, C2H4NR""R""' mit R"" = A, Alkyl und R""' = H, Alkyl) bedeutet.

Bevorzugte Silane sind die im Folgenden aufgeführten Silane: Triethoxysilan, Octadecyltimethoxisilan,
3-(Trimethoxysilyl)-propylmethacrylate, 3-(Trimethoxysilyl)-propylacrylate,
3-(Trimethoxysilyl)-methylmethacrylate, 3-(Trimethoxysilyl)-methylacrylate,
3-(Trimethoxysilyl)-ethylmethacrylate, 3-(Trimethoxysilyl)-ethylacrylate,
3-(Trimethoxysilyl)-pentylmethacrylate, 3-(Trimethoxysilyl)-pentylacrylate,
3-(Trimethoxysilyl)-hexylmethacrylate, 3-(Trimethoxysilyl)-hexylacrylate,
3-(Trimethoxysilyl)-butylmethacrylate, 3-(Trimethoxysilyl)-butylacrylate,
3-(Trimethoxysilyl)-heptylmethacrylate, 3-(Trimethoxysilyl)-heptylacrylate,
3-(Trimethoxysilyl)-octylmethacrylate, 3-(Trimethoxysilyl)-octylacrylate,
Methyltrimethoxysilane, Methyltriethoxysilane, Propyltrimethoxisilane,
Propyltriethoxisilane, Isobutyltrimethoxisilane, lsobutyltriethoxysilane,
Octyltrimethoxysilane, Octyltriethoxysilane, Hexadecyltrimethoxysilane,
Phenyltrimethoxysilane, Phenyltriethoxysilane,
Tridecafluoro-1,1,2,2-tetrahydrooctyltriethoxysilane,
Tetramethoxysilane, Tetraethoxysilane, Oligomeric tetraethoxysilane (DYNASIL® 40 Fa. Degussa), Tetra-n-propoxysilane,
3-Glycidyloxypropyltrimethoxysilane, 3-Glycidyloxypropyltriethoxysilane,
3-Methacryloxylpropyltrimethoxysilane, Vinyltrimethoxysilane, Vinyltriethoxysilane,
3-Mercaptopropyltrimethoxysilane,
3-Aminopropyltriethoxysilane, 3-Aminopropyltrimethoxysilane, 2-Aminoethyl-3-aminopropyltrimethoxysilane, Triaminofunctional propyltrimethoxysilane (DYNASYLAN® TRIAMINO Fa. Degussa), N-(n-Butyl-3-aminopropyltrimethoxysilane, 3-Aminopropylmethyldiethoxysilane.

Die Beschichtungsmittel, hier insbesondere die Silane oder Siloxane werden vorzugsweise in molaren Verhältnissen Aluminiumspinell-Nanopartikel zu Silan von 1:1 bis 10:1 zugegeben. Die Menge an Lösungsmittel beim Desagglomerieren beträgt im Allgemeinen 50 bis 90 Gew.-%, bezogen auf die Gesamtmenge an Aluminiumspinell-Nanopartikel und Lösungsmittel.

Die Desagglomerierung durch Mahlen und gleichzeitige Modifizierung mit dem Beschichtungsmittel erfolgt vorzugsweise bei Temperaturen von 20 bis 150°C, besonders bevorzugt bei 20 bis 90°C.

Erfolgt die Desagglomeration durch Mahlen, wird die Suspension anschließend von den Mahlperlen abgetrennt.

Nach der Desagglomeration kann die Suspension zur Vervollständigung der Reaktion noch bis zu 30 Stunden erhitzt werden. Abschließend wird das Lösungsmittel abdestilliert und der verbleibende Rückstand getrocknet. Es kann auch vorteilhaft sein, die modifizierten Aluminiumspinell-Nanopartikel im Lösungsmittel zu belassen und die Dispersion für weitere Anwendungen zu verwenden.

Es ist auch möglich, die Aluminiumspinell-Nanopartikel in den entsprechenden Lösungsmitteln zu suspendieren und die Reaktion mit dem Beschichtungsmittel nach der Desagglomeration in einem weiteren Schritt durchzuführen.

Die erfindungsgemäß hergestellten Aluminiumspinelle können wie Eingangs beschrieben sehr vielfältig eingesetzt werden. Der Zinkspinell eignet sich wegen seiner Bandlücke als UV-Absorber in Coatings. In Beschichtungsmassen bietet der Zinkspinell den Vorteil der UV-Absorption bei gleichzeitiger Erhöhung der Kratz- und Abriebfestigkeit, bedingt durch die Mohshärte von 8.

Außerdem kann das nanostrukturierte Material als Katalysatormaterial oder als halbleitender Werkstoff für Leuchtdioden und Displays verwendet werden.

Cobaltspinell ist als hochtemperaturstabiles Pigment bereits beschrieben. Mit dem erfindungsgemäßen Verfahren können Nanosuspensionen einfach und effizient formuliert werden. Die Einarbeitung in Bindersysteme und Formulierungen ist ohne Probleme möglich. Besonders Kupferspinell eignet sich aufgrund der großen aktiven Oberfläche und wegen des Kupferions als katalytisch wirksames Material.

### Beispiele

### Beispiel 1:

Eine 50 %ig wässrige Lösung von Aluminiumchlorohydrat wurde mit Zinkchlorid versetzt, dass nach der Kalzinierung das Verhältnis von Aluminiumoxid zu Zinkoxid 50 : 50 beträgt. Nachdem die Lösung durch Rühren homogenisiert wurde, erfolgt die Trocknung in einem Rotationsverdampfer. Das feste Aluminiumchlorohydrat-Zinkchlorid-Gemisch wurde in einer Reibschale zerkleinert, wobei ein grobes Pulver entstand.

Das Pulver wurde in einem Drehrohrofen bei 850°C kalziniert. Die Kontaktzeit in der heißen Zone betrug maximal 5 min. Es wurde ein weißes Pulver erhalten, dessen Kornverteilung dem Aufgabegut entsprach.

Eine Röntgenstrukturanalyse zeigte, dass es sich um Zinkspinell handelt. Der Restchlorgehalt liegt unter 100 ppm. Die Bilder des hochauflösenden REM (Rasterelektronenmikroskopie) zeigen Kristallite < 10 nm, die in agglomerierter Form vorliegen.

In einem weiteren Schritt wurden 40 g Zinkspinell in 160 g Wasser suspendiert. Die Suspension wurde in einer vertikalen Rührwerkskugelmühle der Fa. Netzsch (Typ PE 075) desagglomeriert. Die eingesetzten Mahlperlen bestanden aus Zirkoniumoxid (stabilisiert mit Yttrium) und wiesen eine Größe von 0,3 mm auf. Der pH-Wert der Suspension wurde alle 30 min kontrolliert und durch Zugabe von verdünnter Salpetersäure auf pH 4 - 4,5 gehalten. Nach 6 Stunden wurde die Suspension von den Mahlperlen abgetrennt und mit Hilfe einer analytischen Scheibenzentrifuge der Fa. Brookhaven bezüglich Kornverteilung charakterisiert. Es wurde dabei ein d90 von 55 nm gefunden.

### Beispiel 2:

Eine 50 %ig wässrige Lösung von Aluminiumchlorohydrat wurde mit Cobalt-II-chlorid versetzt, dass nach der Kalzinierung das Verhältnis von Aluminiumoxid zu Cobaltoxid 50:50 betrug. Nachdem die Lösung durch Rühren homogenisiert wurde, erfolgt die Trocknung in einem Rotationsverdampfer. Das feste Aluminiumchlorohydrat-Cobal-II-chlorid-Gemisch wurde in einer Reibschale zerkleinert, wobei ein grobes Pulver entstand.

Das Pulver wurde in einem Drehrohrofen bei 1000°C kalziniert. Die Kontaktzeit in der heißen Zone betrug maximal 5 min. Es wurde ein tiefblaues Pulver erhalten, dessen Kornverteilung dem Aufgabegut entsprach. Eine Röntgenstrukturanalyse zeigte, dass ein Spinellgitter vorliegt.

In einem weiteren Schritt wurden 40 g des Cobaltspinells in 160 g Wasser suspendiert. Die Suspension wurde in einer vertikalen Rührwerkskugelmühle der Fa. Netzsch (Typ PE 075) desagglomeriert. Die eingesetzten Mahlperlen bestanden aus Zirkoniumoxid (stabilisiert mit Yttrium) und wiesen eine Größe von 0,3 mm auf. Der pH-Wert der Suspension wurde alle 30 min kontrolliert und durch Zugabe von verdünnter Salpetersäure auf pH 4 - 4,5 gehalten. Nach 6 Stunden würde die Suspension von den Mahlperlen abgetrennt und mit Hilfe einer analytischen Scheibenzentrifuge der Fa. Brookhaven bezüglich Kornverteilung charakterisiert. Es wurde dabei ein d90 von 60 nm, ein d50 von 34nm und ein d10 von 15 nm gefunden.

## Patentansprüche

1. Verfahren zur Herstellung von Nanopartikeln aus Aluminiumspinellen, **dadurch gekennzeichnet, dass** man eine wässrige Lösung von Aluminiumchlorohydrat mit einem Salz eines Metalls, dessen Oxid mit Aluminiumoxid ein Spinellgitter bilden kann, versetzt, anschließend trocknet, innerhalb weniger als 30 Minuten kalziniert und die so erhaltenen Agglomerate zerkleinert.

2. Verfahren nach Anspruch 1, **dadurch gekennzeichnet, dass** als Aluminiumchlorohydrat eine Verbindung mit der chemischen Formel Al₂(OH)ₓCl_{y} eingesetzt wird, wobei x eine Zahl zwischen 2,5 und 5,5 und y eine Zahl zwischen 3,5 und 0,5 ist, wobei die Summe x+y stets 6 beträgt.

3. Verfahren nach Anspruch 1, **dadurch gekennzeichnet, dass** als Metallsalz für die Bildung des Spinellgitters Salze von Cobalt, Zink, Mangan, Kupfer, Eisen, Magnesium, Cadmium oder Nickel eingesetzt werden.

4. Verfahren nach Anspruch 1, **dadurch gekennzeichnet, dass** man 30 bis 80 Gew.-% Metallsalz, bezogen auf die Al₂O₃-Matrix, einsetzt.

5. Verfahren nach Anspruch 1, **dadurch gekennzeichnet, dass** man die Kalzinierung bei Temperaturen unterhalb 1100°C durchführt.

6. Verfahren nach Anspruch 1, **dadurch gekennzeichnet, dass** man die wässrige Suspension aus Aluminiumchlorohydrat und Metallsalz ohne vorherige Entfernung des Wassers direkt in die Kalzinierungsapparatur einspritzt.

7. Verfahren gemäß Anspruch 1, **dadurch gekennzeichnet, dass** die bei der thermischen Behandlung gebildeten Agglomerate in einem anschließenden Schritt durch eine Nass- oder Trockenmahlung zerkleinert werden.

8. Verfahren gemäß Anspruch 1, **dadurch gekennzeichnet, dass** die bei der thermischen Behandlung gebildeten Agglomerate in einem anschließenden Schritt durch eine Nassvermahlung zerkleinert werden, wobei bei oder nach der Nassmahlung der entstehenden Suspension Acrylate, Polyvinylalkohole, Polyethylenglykole, Stearate oder Wachsemulsionen zugesetzt werden.

9. Verfahren gemäß Anspruch 1, **dadurch gekennzeichnet, dass** die bei der thermischen Behandlung gebildeten Agglomerate in einem anschließenden Schritt durch eine Nassvermahlung zerkleinert und die erhaltene Suspension einer Sprühtrocknung, Gefriertrocknung oder Granulierung unterzogen wird.

10. Verfahren nach Anspruch 1 - 9, **dadurch gekennzeichnet, dass** man die Agglomerate desagglomeriert und gleichzeitig die Oberfläche der Nanopigmente mit Modifizierungsmittel, bevorzugt mit einem Silan oder Siloxan an der Oberfläche verändert.

11. Verfahren nach Anspruch 10, **dadurch gekennzeichnet, dass** man die Agglomerate durch Mahlen in Rührwerkskugelmühlen desagglomeriert.

12. Verfahren nach Anspruch 10, **dadurch gekennzeichnet, dass** man die Agglomerate durch Mahlen oder durch Einwirken von Ultraschall bei 20 bis 90°C desagglomeriert.

13. Verfahren nach Anspruch 10, **dadurch gekennzeichnet, dass** man die Desagglomeration in einem C₁-C₄-Alkohol als Lösungsmittel vornimmt.

14. Verfahren nach Anspruch 10, **dadurch gekennzeichnet, dass** man die Desagglomeration in Aceton, Tetrahydrofuran, Butylacetat und sonstigen in der Lackindustrie eingesetzten Lösungsmitteln durchführt.

15. Verfahren nach Anspruch 10, **dadurch gekennzeichnet, dass** das molare Verhältnis von Nanopartikel zu Beschichtungsmittel 1:1 bis 10:1 beträgt.

## Claims

1. A process for producing nanoparticles of aluminum spinels, wherein an aqueous solution of aluminum chlorohydrate is admixed with a salt of a metal whose oxide is able to form a spinel lattice with aluminum oxide, the mixture is subsequently dried, calcined for less than 30 minutes and the agglomerates obtained in this way are comminuted.

2. The process as claimed in claim 1, wherein a compound of the chemical formula Al₂(OH)ₓCl_{y}, where x is from 2.5 to 5.5 and y is from 3.5 to 0.5 and the sum x+y is always 6, is used as aluminum chlorohydrate.

3. The process as claimed in claim 1, wherein salts of cobalt, zinc, manganese, copper, iron, magnesium, cadmium or nickel are used as metal salt for the formation of the spinel lattice.

4. The process as claimed in claim 1, wherein from 30 to 80% by weight of metal salt, based on the Al₂O₃ matrix, is used.

5. The process as claimed in claim 1, wherein the calcination is carried out at temperatures below 1100°C.

6. The process as claimed in claim 1, wherein the aqueous suspension of aluminum chlorohydrate and metal salt is sprayed directly into the calcination apparatus without prior removal of the water.

7. The process as claimed in claim 1, wherein the agglomerates formed in the heat treatment are broken up by wet or dry milling in a subsequent step.

8. The process as claimed in claim 1, wherein the agglomerates formed in the heat treatment are broken up by wet milling in a subsequent step, with acrylates, polyvinyl alcohols, polyethylene glycols, stearates or wax emulsions being added to the suspension during or after wet milling.

9. The process as claimed in claim 1, wherein the agglomerates formed in the heat treatment are broken up by wet milling in a subsequent step and the suspension obtained is subjected to spray drying, freeze drying or granulation.

10. The process as claimed in claims 1-9, wherein the agglomerates are deagglomerated and the surface of the nanopigments is at the same time altered by means of modifying agents, preferably by means of a silane or siloxane at the surface.

11. The process as claimed in claim 10, wherein the agglomerates are deagglomerated by milling in stirred ball mills.

12. The process as claimed in claim 10, wherein the agglomerates are deagglomerated by milling or by action of ultrasound at from 20 to 90°C.

13. The process as claimed in claim 10, wherein the deagglomeration is carried out in a C₁-C₄-alcohol as solvent.

14. The process as claimed in claim 10, wherein the deagglomeration is carried out in acetone, tetrahydrofuran, butyl acetate and other solvents used in the surface coatings industry.

15. The process as claimed in claim 10, wherein the molar ratio of nanoparticles to coating agent is from 1:1 to 10:1.

## Revendications

1. Procédé pour la préparation de nanoparticules en spinelles d'aluminium, **caractérisé en ce qu'**on additionne une solution aqueuse de chlorhydrate d'aluminium d'un sel d'un métal dont l'oxyde peut former un réseau de spinelle avec l'oxyde d'aluminium, puis on sèche, on calcine en moins de 30 minutes et on broie les agglomérats ainsi obtenus.

2. Procédé selon la revendication 1, **caractérisé en ce qu'**on utilise comme chlorhydrate d'aluminium un composé présentant la formule chimique Al₂(OH)ₓCl_{y}, où x vaut un nombre entre 2,5 et 5,5 et y un nombre entre 3,5 et 0,5, la somme x + y valant toujours 6.

3. Procédé selon la revendication 1, **caractérisé en ce qu'**on utilise comme sel métallique pour la formation du réseau de spinelle des sels de cobalt, de zinc, de manganèse, de cuivre, de fer, de magnésium, de cadmium ou de nickel.

4. Procédé selon la revendication 1, **caractérisé en ce qu'**on utilise 30 à 80% en poids de sel métallique par rapport à la matrice d'Al₂O₃.

5. Procédé selon la revendication 1, **caractérisé en ce qu'**on réalise la calcination à des températures inférieures à 1100°C.

6. Procédé selon la revendication 1, **caractérisé en ce qu'**on injecte la suspension aqueuse de chlorhydrate d'aluminium et de sel métallique sans élimination préalable de l'eau directement dans l'appareil de calcination.

7. Procédé selon la revendication 1, **caractérisé en ce que** les agglomérats formés lors du traitement thermique sont broyés dans une étape consécutive par un broyage humide ou à sec.

8. Procédé selon la revendication 1, **caractérisé en ce que** les agglomérats formés lors du traitement thermique sont broyés dans une étape consécutive par un broyage humide, où on ajoute pendant ou après le broyage humide des acrylates, des poly(alcools vinyliques), des polyéthylèneglycols, des stéarates ou des émulsions de cire à la suspension qui se forme.

9. Procédé selon la revendication 1, **caractérisé en ce que** les agglomérats formés lors du traitement thermique sont broyés dans une étape consécutive par un broyage humide et la suspension obtenue est soumise à un séchage par pulvérisation, à une lyophilisation ou à une granulation.

10. Procédé selon les revendications 1-9, **caractérisé en ce qu'**on désagglomère les agglomérats et modifie simultanément la surface des nanopigments avec un agent de modification, de préférence avec un silane ou un siloxane à la surface.

11. Procédé selon la revendication 10, **caractérisé en ce qu'**on désagglomère les agglomérats par broyage dans des broyeurs à billes équipés d'un agitateur.

12. Procédé selon la revendication 10, **caractérisé en ce qu'**on désagglomère les agglomérats par broyage ou par l'effet d'ultrasons à 20 jusqu'à 90°C.

13. Procédé selon la revendication 10, **caractérisé en ce qu'**on réalise la désagglomération dans un alcool en C₁-C₄ comme solvant.

14. Procédé selon la revendication 10, **caractérisé en ce qu'**on réalise la désagglomération dans de l'acétone, du tétrahydrofuranne, de l'acétate de butyle et d'autres solvants utilisés dans l'industrie de la laque.

15. Procédé selon la revendication 10, **caractérisé en ce que** le rapport molaire de nanoparticules à agent de revêtement est de 1:1 à 10:1.
